# EUROPÄISCHE PATENTSCHRIFT

(11) **EP 2 554 406 B1**
(45) Veröffentlichungstag und Bekanntmachung des Hinweises auf die Patenterteilung: **30.04.2014**
(21) Anmeldenummer: 12179064.6
(22) Anmeldetag: 02.08.2012
(51) Int. Cl.: B60D 1/54, B60D 1/62

(54) **Steuerungssystem**
Control system
Système de commande

(30) Priorität: 05.08.2011 DE 102011052433
(43) Veröffentlichungstag der Anmeldung: 06.02.2013
(73) Patentinhaber: Scambia Holdings Cyprus Limited, 3106 Limassol (CY)
(72) Erfinder: Wieczorek, Romeo, 73732 Esslingen (DE); Wegner, Bert, 73333 Gingen (DE); Riehle, Jörg, 71679 Asperg (DE)
(74) Vertreter: Hoeger, Stellrecht & Partner Patentanwälte

(56) Entgegenhaltungen:
- EP-A1- 1 634 729
- EP-A2- 1 160 105
- EP-A2- 1 225 068
- DE-A1- 10 135 272
- DE-A1- 19 612 961

## Beschreibung

Die Erfindung betrifft ein Steuerungssystem für Zusatzsysteme von Kraftfahrzeugen, welche ein durch einen Antrieb beeinflussbares bewegbares Element aufweisen, insbesondere für Anhängekupplungen mit einem relativ zu einer fahrzeugfesten Lagereinheit bewegbaren Kugelhals, dessen Bewegung durch den Antrieb beeinflussbar ist, wobei das Steuerungssystem eine mindestens mit dem Kraftfahrzeug kommunizierende Überwachungseinheit aufweist, welche nach einer Zustandsprüfung eine Aktion des Antriebs zulässt oder verhindert und eine Antriebssteuerung zum Betreiben des Antriebs.

Ein derartiges Steuerungssystem ist beispielsweise aus der EP 1 634 729 A1 bekannt.

Zusatzsysteme im Sinne dieser Anmeldung können bewegbare, insbesondere schwenkbare Anhängekupplungen oder schwenkbare oder höhenverstellbare Hecktransportsysteme sein.

Da mit diesen Steuerungssystemen eine sicherheitsrelevante Baugruppe eines Kraftfahrzeugs gesteuert wird, unterliegt das gesamte Steuerungssystem dem Sicherheitsstandard für eine derartige Baugruppe und ist daher aufwendig herzustellen.

Der Erfindung liegt daher die Aufgabe zugrunde, ein Steuerungssystem der gattungsgemäßen Art derart zu verbessern, dass dies möglichst kostengünstig herstellbar ist.

Diese Aufgabe wird durch ein Steuerungssystem gemäß Anspruch 1 gelöst.

Da weder die Antriebssteuerung noch der Antrieb im funktionsblockierten Zustand Aktionen des Antriebs zulassen, sind diese während des funktionsblockierten Zustandes für die Sicherheitsbetrachtung und den maßgeblichen Sicherheitsstandards nicht relevant, so dass dadurch dle Möglichkeit besteht, die Antriebssteuerung und den Antrieb entsprechend einem weit niedrigeren Sicherheitsstandard auszuführen, als die Überwachungseinheit selbst.

Um eine Aktion des Antriebs manuell auslösen zu können, ist vorzugsweise vorgesehen, dass die Überwachungseinheit mit einer Auslöseeinheit gekoppelt ist und dass mit der Auslöseeinheit ein Anforderungssignal erzeugbar ist, welches die Antriebssteuerung zum Starten der Aktion des Antriebs veranlasst und dabei die Antriebssteuerung in den funktionsfähigen zustand schaltet.

Somit wird die Antriebssteuerung erst dann in den funktionsfähigen Zustand gebracht, wenn in diesem Fall ein konkretes durch die Auslöseeinheit erzeugtes Anforderungssignal für eine Aktion des Antriebs vorhanden ist.

Um insbesondere dann, wenn die Antriebssteuerung vor einem derartigen Anforderungssignal in einem funktionsunfähigen Zustand ist, der Antriebssteuerung ausreichend Zeit zu geben, beispielsweise den Prozessor hoch zu fahren und den funktionsfähigen Zustand zu erreichen, ist vorzugsweise vorgesehen, dass die Überwachungseinheit die Antriebssteuerung vor Weitergabe des Anforderungssignals an diese in den funktionsfähigen Zustand schaltet, so dass sichergestellt ist, dass die Antriebssteuerung bei Empfang des Anforderungssignals in einem vollen funktionsfähigen Zustand ist und somit durch einen vorzeitigen Empfang des Anforderungssignals keine Fehlfunktionen ausgelöst werden können.

Ein derartiger funktionsblockierter Zustand der Antriebssteuerung kann jeder Zustand sein, bei welchem - wie ausgeführt - ein Ansteuern des Antriebs durch die Antriebssteuerung möglich ist, wobei dies grundsätzlich auch durch ein Blockiersignal für einen Prozessor der Antriebssteuerung möglich wäre, so dass sich der Prozessor selbst in einem arbeitsfähigen Zustand befindet, jedoch durch das Blockiersignal nicht arbeiten kann.

Ein funktionsblockierter Zustand würde beispielsweise auch dann vorliegen, wenn eine Verbindung zwischen der Antriebssteuerung und dem Antrieb unterbrochen ist, da damit die Antriebssteuerung unabhängig davon, in welchem Steuerungszustand sie sich befindet, nicht in der Lage ist, den Antrieb aufgrund der unterbrochenen Leitung zwischen der Antriebssteuerung und dem Antrieb, anzusteuern und in Aktion zu setzen.

Noch sicherer ist es jedoch, wenn der funktionsblockierte Zustand der Antriebssteuerung ein funktionsunfähiger Zustand ist, in welchem die Antriebssteuerung nicht arbeiten kann, das heißt, dass in diesem Fall die Funktionsblockierung soweit greift, dass ein Prozessor der Antriebssteuerung nicht in der Lage ist, überhaupt Programme abzuarbeiten.

Ein Erreichen des funktionsfähigen Zustandes könnte beispielsweise dadurch erfolgen, dass die Zeitbasis eines derartigen Prozessors abgeschaltet ist, so dass keine aufeinanderfolgenden Arbeitsschritte mehr möglich sind.

Eine besonders günstige Lösung sieht vor, dass der funktionsunfähige Zustand der Antriebssteuerung ein vollständig abgeschalteter Zustand der Antriebssteuerung ist, das heißt, dass die Antriebssteuerung selbst abgeschaltet ist, so dass dadurch überhaupt keine Aktionen seitens der Antriebssteuerung möglich sind.

Die Tatsache, dass eine Schnittstelle zwischen der Überwachungseinheit und der Antriebssteuerung vorgesehen ist, ermöglicht es die Antriebssteuerung für das Zusatzsystem fahrzeugunabhängig zu konzipieren und die fahrzeugspezifischen Funktionen durch die Überwachungseinheit zu realisieren, so dass die Antriebssteuerung unabhängig von dem spezifischen Fahrzeug, das heißt fahrzeugübergreifend, realisierbar ist.

Im einfachsten Fall ist vorgesehen, dass im funktionsunfähigen Zustand eine Stromversorgung der Antriebssteuerung unterbrochen ist.

Um die Zeiten, in denen die Antriebssteuerung überhaupt in einem funktionsfähigen Zustand ist, möglichst kurz zu halten, ist vorzugsweise vorgesehen, dass die Überwachungseinheit die Antriebssteuerung vor oder zum Durchführen einer Aktion des Antriebs vom funktionsblockierten oder funktionsunfähigen Zustand in den funktionsfähigen Zustand schaltet.

Das heißt, dass die Antriebssteuerung selbst nicht in einem stets funktionsfähigem Zustand ist, sondern in der Regel in dem funktionsblockierten Zustand ist und lediglich während der Durchführung einzelner Aktionen des Antriebs in den funktionsfähigen Zustand geschaltet wird.

Um außerdem die Antriebssteuerung für möglichst kurze Zeit in dem funktionsfähigen Zustand zu belassen, ist ferner vorgesehen, dass die Überwachungseinheit nach Beendigung einer Aktion des Antriebs die Antriebssteuerung in den funktionsblockierten Zustand schaltet.

Insbesondere kann ein derartiges Umschalten der Antriebssteuerung von dem funktionsfähigen Zustand in den funktionsblockierten Zustand unmittelbar nach Beendigung einer Aktion des Antriebs erfolgen, wobei die Überwachungseinheit vorzugsweise die tatsächliche Ausführung der Aktion des Antriebs überprüft und gegebenenfalls auch noch überprüft, ob ein betriebssicherer Zustand des Zusatzsystems vorliegt.

Um den funktionsfähigen Zustand der Antriebssteuerung nur während eines möglichst kurzen Zeitraums zu erhalten, ist vorzugsweise vorgesehen, dass die Überwachungseinheit die Antriebssteuerung lediglich während der Ausführung einer Aktion des Antriebs in den funktionsfähigen Zustand schaltet.

Damit können die Zeiten, während welcher die Antriebssteuerung im funktionsfähigen Zustand ist, auf so kurze Zeiträume beschränkt werden, dass die Möglichkeit besteht, den Sicherheitsstandard für die Antriebssteuerung erheblich abzusenken.

Beispielsweise ist bei einer vorteilhaften Lösung vorgesehen, dass die Überwachungseinheit entsprechend dem notwendigen Sicherheitsstandard für eine Gefährdung des Fahrzeugs ausgelegt ist.

Das führt beispielsweise dazu, dass die Überwachungseinheit gemäß Sicherheitsstandard ASIL C oder D ausgelegt ist.

Ferner ist vorzugsweise vorgesehen, dass die Antriebssteuerung entsprechend einem niedrigeren Sicherheitsstandard ausgelegt ist, als die Überwachungseinheit.

Ein derartiger niedrigerer Sicherheitsstandard liegt mindestens eine, vorzugsweise mehrer Stufen unter dem Sicherheitsstandard für die Überwachungseinheit und beträgt beispielsweise ASIL B oder ASIL A.

Für die Frage, wieweit der Sicherheitsstandard durch den nur für kurze Zeiträume funktionsfähigen Zustand der Antriebssteuerung abgesenkt wird, ist es ebenfalls wesentlich, während welcher Zustände ein derartiger funktionsfähiger Zustand der Antriebssteuerung überhaupt erlaubt wird.

Aus diesem Grund ist vorzugsweise vorgesehen, dass die Überwachungseinheit für die Zustandsprüfung mindestens einen Fahrzeugzustandsparameter und/oder mindestens einen Fahrzustandsparameter umfasst, die sicher stellen, dass überhaupt der funktionsfähige Zustand der Antriebssteuerung lediglich während Fahrzeugzuständen und/oder Fahrzustände erreicht wird, bei welchen das Gefährdungspotential für das Kraftfahrzeug minimal ist oder ausgeschlossen werden kann.

Beispielsweise ist es denkbar, als Fahrzustand lediglich ein Fahren mit einer Geschwindigkeit von weniger als 5 km/h zu definieren, während welchem der funktionsfähige Zustand der Antriebssteuerung erreicht werden darf.

Alternativ oder ergänzend wäre es aber auch denkbar, einen Fahrzeugzustand zu definieren, bei welchem eine oder mehrere Türen und/oder Klappen des Fahrzeugs geöffnet sind, so dass bereits aufgrund dieses Fahrzeugzustands davon auszugehen ist, dass das Fahrzeug entweder steht oder nur mit geringer Geschwindigkeit bewegt wird.

In beiden Fällen lässt sich das Gefährdungspotential für das Kraftfahrzeug durch den funktionsfähigen Zustand minimieren.

Um einen betriebssicheren Zustand des Zusatzsystems erfassen zu können, ist vorzugsweise vorgesehen, dass die Überwachungseinheit für die Zustandsprüfung funktionelle Zustände des Zusatzsystems erfasst.

Mit diesem Erfassen der funktionellen Zustände des Zusatzsystems lässt sich überprüfen, ob beispielsweise das bewegbare Element des Zusatzsystems einen sicheren Zustand, insbesondere die jeweilige Endstellung, sicher erreicht hat und/oder noch in dieser steht.

Insbesondere ist vorgesehen, dass die Antriebssteuerung funktionelle Zustände des Zusatzsystems erfasst.

Hinsichtlich der zu erfassenden funktionellen Zustände des Zusatzsystems sind die unterschiedlichsten Lösungen denkbar.

So sieht eine vorteilhafte Lösung vor, dass die Überwachungseinheit und/oder die Antriebssteuerung Antriebsstellungen des Antriebs anzeigende Stellungssignale erfassen.

Besonders günstig ist es für die Frage des Erkennens sicherer Zustände des Zusatzsystems, wenn die Überwachungseinheit und/oder die Antriebssteuerung Antreibsendstellungen des Antriebs anzeigende Stellungssignale erfassen.

Beispielsweise wäre es denkbar, die Antriebssteuerung so auszubilden, dass sie die Stellungssignale an die Überwachungseinheit weiterleitet.

Um sicher zu gehen, dass die Stellungssignale durch Fehlfunktionen der Antriebssteuerung nicht verändert werden, ist vorzugsweise vorgesehen, dass die Antriebssteuerung die Stellungssignale an die Überwachungseinheit unverändert weiterleitet.

Eine weitere vorteilhafte Lösung sieht vor, dass die Überwachungseinheit und/oder die Antriebssteuerung Positionen des bewegbaren Elements anzeigende Positionssignale erfassen.

Damit besteht die Möglichkeit, zu überprüfen, ob seitens des bewegbaren Elements die vorgesehenen Positionen erreicht wurden.

Insbesondere ist vorzugsweise vorgesehen, dass die Überwachungseinheit und/oder die Antriebssteuerung Endpositionen des bewegbaren Elements anzeigende Positionssignale erfassen, so dass die Möglichkeit besteht, zu überprüfen, ob insbesondere die Endpositionen und somit die sicheren Positionen des bewegbaren Elements erreicht wurden.

Beispielsweise lässt sich dies dadurch realisieren, dass die Antriebssteuerung die Positionssignale an die Überwachungseinheit weiterleitet.

Dabei ist es aus Sicherheitsgründen besonders vorteilhaft, wenn die Antriebssteuerung die Positionssignale unverändert an die Überwachungseinheit weiterleitet, so dass Fehlfunktionen der Antriebssteuerung bei einer Verarbeitung der Positionssignale sich nicht auf die von der Überwachungseinheit empfangenen Positionssignale auswirken.

Insbesondere ist vorgesehen, dass die Überwachungseinheit die Antriebssteuerung erst nach Vorliegen einer Anforderungssignals für eine Aktion des Antriebs in den funktionsfähigen Zustand schaltet, das heißt, dass bei der Überwachungseinheit eine Anforderung für eine Aktion des Antriebs vorliegen muss, und erst eine derartige Anforderung für eine Aktion ein Umschalten der Antriebssteuerung von dem funktionsblockierten Zustand in den funktionsfähigen Zustand auslösen kann, so dass ohne eine derartige Anforderung einer Aktion die Antriebssteuerung stets im funktionsblockierten Zustand verbleibt.

Bei der Anforderung einer Aktion ist beispielsweise eine Anforderung das aus unterschiedlichen Gründen vorliegen kann.

Ein Anforderungssignal kann beispielsweise durch eine Auslöseeinheit erzeugt werden, die manuell von einer Bedienungsperson betätigt wird.

Ein Anforderungssignal kann aber auch durch eine Verspannsteuerung ausgelöst werden, wenn diese eine Aktion des Antriebs zum Verspannen einer Fixierung des bewegbaren Elements für erforderlich erachtet.

Um eine Aktion des Antriebs manuell auslösen zu können, ist vorgesehen, dass die Überwachungseinheit mit einer Auslöseeinheit gekoppelt ist und dass mit der Auslöseeinheit ein Anforderungssignal erzeugbar ist, welches die Antriebssteuerung zum Starten der Aktion des Antriebs veranlasst und dabei die Antriebssteuerung in den funktionsfähigen zustand schaltet.

Somit wird die Antriebssteuerung erst dann in den funktionsfähigen Zustand gebracht, wenn in diesem Fall ein konkretes durch die Auslöseeinheit erzeugtes Anforderungssignal für eine Aktion des Antriebs vorhanden ist.

Um insbesondere dann, wenn die Antriebssteuerung vor einem derartigen Anforderungssignal in einem funktionsunfähigen Zustand ist, der Antriebssteuerung ausreichend Zeit zu geben, beispielsweise den Prozessor hoch zu fahren und den funktionsfähigen Zustand zu erreichen, ist vorgesehen, dass die Überwachungseinheit die Antriebssteuerung vor Weitergabe des Anforderungssignals an diese in den funktionsfähigen Zustand schaltet, so dass sichergestellt ist, dass die Antriebssteuerung bei Empfang des Anforderungssignals in einem vollen funktionsfähigen Zustand ist und somit durch einen vorzeitigen Empfang des Anforderungssignals keine Fehlfunktionen ausgelöst werden können.

Um insgesamt eine sichere Durchführung der Aktion des Antriebs und insbesondere ein sicheres Funktionieren der Zusatzeinheit zu gewährleisten ist vorzugsweise vorgesehen, dass die Überwachungseinheit vor Weitergabe des Anforderungssignals eine Startzustandsprüfung ausführt und dazu mindestens ein Fahrzustandssignal des Kraftfahrzeugs und/oder mindestens ein Fahrzeugzustandssignal des Kraftfahrzeugs und/oder mindestens ein Positionssignal des Zusatzsystems und/oder mindestens ein Stellungssignal des Antriebs erfasst und berücksichtigt.

Mit einer derartigen Funktionsweise der Überwachungseinheit ist sichergestellt, dass die Aktion des Antriebs nicht auf unzulässigen Zuständen des Zusatzsystems basiert oder von derartigen unzulässigen Zuständen ausgeht und somit ebenfalls wiederum zu unzulässigen und somit unsicheren Zuständen des Zusatzsystems führt.

Desgleichen ist, um eine sichere Funktion des Zusatzsystems auch nach Durchführen der Aktion des Antriebs zu gewährleisten, vorgesehen, dass die Überwachungseinheit vor einem Umschalten der Antriebssteuerung in den funktionsblockierten Zustand eine Endzustandsprüfung durchführt und dazu mindestens ein Fahrzustandssignal und/oder mindestens ein Fahrzeugzustandssignal und/oder mindestens ein Positionssignal des Zusatzsystems und/oder mindestens ein Stellungssignal des Antriebs erfasst und berücksichtigt.

Ein entsprechend den vorstehend beschriebenen Ausführungsbeispielen vorgesehenes Anforderungssignal ist üblicherweise ein Anforderungssignal, welches einen Wechsel des Zustandes des Zusatzsystems zur Folge hat.

Beispielsweise ist ein derartiges Anforderungssignal im Falle einer Anhängekupplung ein Anforderungssignal, welches ein Lösen der Verriegelung des Kugelhalses ein Bewegen des Kugelhalses von einer Stellung in die andere Stellung, das beispielsweise von einer Arbeitsstellung in die Ruhestellung oder umgekehrt, bewirkt, und nachfolgend wieder ein Fixieren des Kugelhalses in dieser Stellung.

Ein derartiges Anforderungssignal löst somit eine Aktion der Anhängekupplung aus, die ein hohes Gefährdungspotential hat.

Aus diesem Grund erfolgt vor einer derartigen Aktion des Antriebs eine genaue Überprüfung des Fahrzustandes in der Art, dass der Fahrzustand eine Geschwindigkeit hat, die beispielsweise geringer ist als 5 km/h und/oder des Fahrzeugzustandes, der beispielsweise mindestens eine geöffnete Tür oder Heckklappe oder Kofferraumklappe fordert, um ein Bewegen des Kugelhalses von der einen Stellung in die andere Stellung, das heißt von der Ruhestellung in die Arbeitsstellung oder umgekehrt, zuzulassen.

Es besteht aber auch die Möglichkeit, Anforderungssignale anderer Art vorzusehen, beispielsweise Anforderungssignale, die eine Aktion des Antriebs hervorrufen, welche lediglich die bestehende Fixierung nochmals aktiviert, insbesondere ein Verspannen der Fixierung erneuert.

Hierzu ist beispielsweise vorgesehen, dass der Überwachungseinheit eine Verspannsteuerung zugeordnet ist, welche ein Anforderungssignal erzeugt, wobei dieses Anforderungssignal lediglich zu einer Aktion des Antriebs dergestalt führt, dass die Fixierung erneut aktiviert wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Kraftfahrzeugs;
- Fig. 2: eine schematische Darstellung einer ersten Ausführungsform eines erfindungsgemäßen Steuerungssystems und
- Fig. 3: eine schematische Darstellung einer zweiten Ausführungsform eines erfindungsgemäßen Steuerungssystems.

Ein als Ganzes mit 10 bezeichnetes Kraftfahrzeug umfasst eine Karosserie 12 und einen in der Karosserie 12 vorgesehenen Fahrzeugantrieb 14 mit welchem das erfindungsgemäße Kraftfahrzeug 10 bewegbar ist.

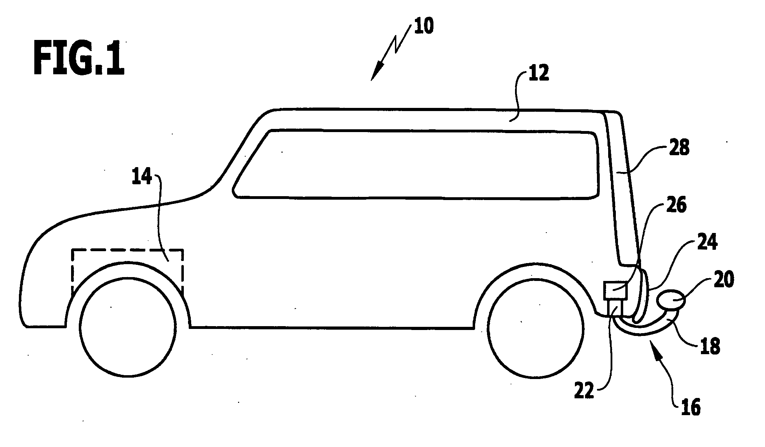

Dieses Kraftfahrzeug 10 ist mit einem Zusatzsystem 16 in Form einer Anhängekupplung versehen, die beispielsweise einen Kugelhals 18 mit einer Kupplungskugel 20 aufweist, welche durch eine an der Karosserie 12 fest angeordnete Lager-/Fixiereinheit 22 relativ zur Karosserie 12 in einer in Fig. 1 dargestellten Arbeitsposition festlegbar, jedoch auch durch die Lager-/Fixiereinheit 22 von der in Fig. 1 dargestellten Arbeitsstellung in welcher sich der Kugelhals 18 in einer Längsmittelebene der Karosserie 12 erstreckt, in eine Ruhestellung relativ zur Karosserie 12 bewegbar ist, in welcher sich der Kugelhals 18 quer zur Längsmittelebene erstrecht, wobei in der Ruhestellung der Kugelhals 18 mit der Kupplungskugel 20 vorzugsweise durch eine heckseitige Stoßfängereinheit 24 abgedeckt und somit von außerhalb der Karosserie 12 unsichtbar positionierbar und in dieser Position durch die Lager-/Fixiereinheit 22 ebenfalls festlegbar ist.

Vorzugsweise ist dabei die Lager-/Fixiereinheit mittels eines Querträgers 26 mit der Karosserie 12 verbunden und somit relativ zu dieser verankert.

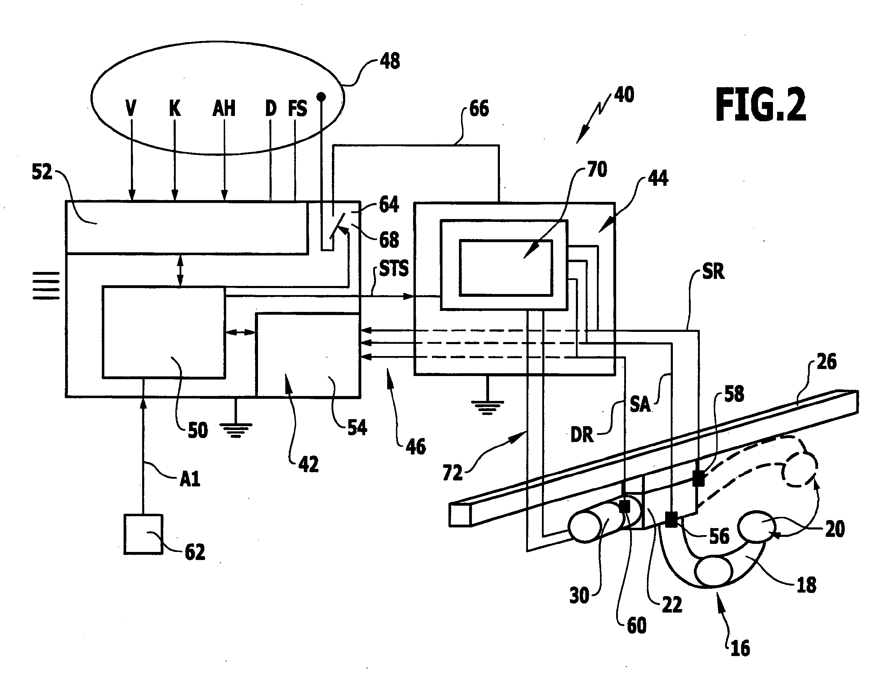

Wie insbesondere in Fig. 2 dargestellt, ist der Anhängekupplung 16 ein Antrieb 30 zugeordnet, mit welchem der Kugelhals 18 der Anhängekupplung 16, insbesondere die einzelnen Stellungen des Kugelhalses 18, beeinflussbar sind.

Vorzugsweise ist dabei der Antrieb 30 der Lager-/Fixiereinheit 22 zugeordnet und dient dabei entweder dazu, lediglich die Fixierung des Kugelhalses 18 mit der Kupplungskugel 20 in der durchgezogen gezeichneten Arbeitsstellung oder der gestrichelt gezeichneten Ruhestellung zu lösen und wiederherzustellen, so dass der durch die Lager-/Fixiereinheit 22 stets noch bewegbar geführte, vorzugsweise um eine oder mehrere Achsen schwenkbare Kugelhals 18 mit der Kupplungskugel 20 zwischen der in Fig. 2 durchgezogen gezeichnete Arbeitsstellung und der in Fig. 2 gestrichelt gezeichneten Ruhestellung hin und her bewegbar ist.

Der Antrieb 30 kann aber auch dazu dienen, derart auf die Lager-/Fixiereinheit 22 einzuwirken, dass einerseits die Fixierung des Kugelhalses 18 in der durchgezogen gezeichneten Arbeitsstellung oder der gestrichelt gezeichneten Ruhestellung lösbar ist und andererseits mittels des Antriebs ebenfalls auch die Bewegung des Kugelhalses 18 mit der Kupplungskugel 20 zwischen der Arbeitsstellung und der Ruhestellung ausführbar ist.

Obwohl der Kugelhals 18 mit der Kupplungskugel 20 durch die Lager-/Fixiereinheit 22 auch bei gelöster Fixierung bewegbar, insbesondere verschwenkbar., gehalten ist, und somit zwar bewegbar aber stets noch mit der Karosserie 12 des Kraftfahrzeugs 10 verbunden bleibt, ist die Frage, wie und wann der Antrieb 30 angesteuert wird, für das Kraftfahrzeug 10 hochgradig sicherheitsrelevant, da bei einer angehängten Anhängelast ein Lösen der Fixierung des Kugelhalses 18 mit der Kupplungskugel 20 durch die Lager-/Fixiereinheit 22 oder auch ein Verschwenken des Kugelhalses 18 mit der Kupplungskugel 20 zwischen der Arbeitsstellung und der Ruhestellung in Abhängigkeit von einem Zustand des Kraftfahrzeugs, insbesondere einem Fahrzustand, und einem Fahrzeugzustand ein hochgradiges Gefährdungspotential für das Kraftfahrzeug 10 darstellen kann.

Aus diesem Grund ist zum Betreiben des Antriebs 30 ein Steuerungssystem 40 im Kraftfahrzeug 10 vorgesehen, welches das Gefährdungspotential für das Kraftfahrzeug 10 durch die Anhängekupplung 16 ausschließt, zumindest minimiert.

Das Steuerungssystem 40 umfasst dabei eine als Ganzes mit 42 bezeichnete Überwachungseinheit und eine den Antrieb 30 unmittelbare ansteuernde Antriebssteuerung 44 welche miteinander, beispielsweise über ein Bus-System 46 beispielsweise einen Lin-Bus, kommunizieren.

Ferner ist die Überwachungseinheit 42 vorzugsweise mit einem Fahrzeug-Bus-System 48 verbunden und erhält durch dieses mindestens die minimal notwendigen sicherheitsrelevanten Informationen, vorzugsweise eine Vielzahl von sicherheitsrelevanten Informationen.

Die Überwachungseinheit 42 kann eine separate Einheit sein oder sie kann in ein fahrzeugseitiges Lichtsteuergerät integriert sein.

Die Überwachungseinheit 42 unterliegt dabei den für Anhängekupplungen üblichen Sicherheitsstandards gemäß ISO 26262, beispielsweise dem Sicherheitsstandard ASIL B oder ASIL C.

Die Überwachungseinheit 42 wertet dabei die sicherheitsrelevanten Informationen aus und betreibt dann die Antriebssteuerung 44, die Ihrerseits unmittelbar den Antrieb 30 ansteuert in der nachfolgend beschriebenen spezifischen Art und Weise.

Die Überwachungseinheit 42 umfasst Ihrerseits beispielsweise eine zentrale Prozessoreinheit 50 mit beispielsweise zwei redundanten Prozessoren die mit einer Eingangsstufe 52 zusammenwirken, welche sicherheitsrelevante Signale vom Fahrzeug-Bus empfängt und für die Verarbeitung durch die zentrale Prozessoreinheit 50 umsetzt oder welche auch unmittelbar über das Fahrzeug-Bus-System 48 übermittelte Daten zu diesen sicherheitsrelevanten Signalen empfängt und somit mit dem Fahrzeug-Bus-System 48 kommuniziert.

Beispielsweise gehören zu den sicherheitsrelevanten Informationen Informationen über den Fahrzustand, beispielsweise über die Geschwindigkeit V des Kraftfahrzeugs 10 im jeweiligen Moment und/oder in der Vergangenheit, von der Überwachungseinheit 42 als Information über den Fahrzustand des Kraftfahrzeugs 10 behandelt wird. Darüberhinaus besteht noch die Möglichkeit, in der Eingangstufe 52 eine Information zu ermitteln, die beispielsweise über die Fahrdynamik D des Kraftfahrzeugs 10, also beispielsweise über Beschleunigungen und Verzögerungen Auskunft gibt.

Informationen über den Fahrzeugzustand des Kraftfahrzeugs 10 sind beispielsweise Informationen über den Zustand der Karosserie 12 der beispielsweise insoweit relevant ist, als eine Heckklappe 28 der Karosserie 12 geöffnet oder geschlossen sein kann, wobei die geöffnete Hecklappe 29 beispielsweise als Indiz dafür herangezogen wird, dass der Betreiber des Kraftfahrzeugs damit beschäftigt ist, einen Anhänger an die Anhängekupplung zu hängen, was mit dem Zustand geöffneter Heckklappe 28 assoziiert wird oder dabei ist, mit dem Kraftfahrzeug 10 loszufahren, was mit dem Zustand geschlossener Heckklappe 28 in Verbindung gebracht wird.

Diese Information wird in Fig. 2 als K bezeichnet.

Ferner wird der Eingangsstufe 52 die Information, ob ein Anhänger an den Kugelhals 18 angehängt ist oder nicht, als Information AH übermittelt, so dass die Information AH ebenfalls eine Aussage über den Fahrzeugszustand macht.

Schließlich wird der Eingangsstufe 52 noch die Information FS übermittelt, die beispielsweise über das Fahrzeug-Bus-System 48 zur Verfügung gestellt wird, und Auskunft über die vom Kraftfahrzeug 10 zurückgelegte Fahrstrecke gibt.

Die zentrale Prozessoreinheit 50 ist nun in der Lage, aus der Eingangsstufe 52 die vorstehend genannten Informationen auszulesen, um beispielsweise im Zuge einer Startzustandsprüfung zu entscheiden, ob und zu welchem Zweck ein Einschalten des Antriebs 30 über die Antriebssteuerung 44 erfolgen soll oder nicht.

Ferner umfasst die Überwachungseinheit 42 noch eine Zustandserfassungsstufe 54 für Zustände des Zusatzsystems 16, das heißt in diesem Fall die Anhängekupplung 16.

Auch die Informationen dieser Zustandserfassungsstufe 54 sind durch die zentrale Prozessoreinheit 50 auswertbar, um die Voraussetzungen für einen sicheren Betrieb des Antriebs 30 zu schaffen.

Beispielsweise empfängt die Zustandserfassungsstufe 54 ein Signal SA von einem Sensor 56, welcher das Signal SA dann abgibt, wenn der Kugelhals 18 mit der Kupplungskugel 20 in der Arbeitsstellung steht, ansonsten beispielsweise kein Signal oder ein anderes Signal abgibt.

Darüberhinaus erfasst die Zustandserfassungsstufe 54 ein Signal SR eines Sensors 58, welcher dieser dann abgibt, wenn der Kugelhals 18 in der in Fig. 2 dargestellten Ruhestellung steht, ansonsten beispielsweise kein Signal oder ein anderes Signal abgibt.

Ferner ist noch ein weiterer Sensor 60 dem Antrieb 30 zugeordnet, dies ist beispielsweise ein Drehstellungssensor, der ein Signal DR abhängig von der Drehstellung des Antriebs 30 abgibt. Das Signal DR kann aber auch beispielsweise bei einem linearen Antrieb 30 ein Signal über eine lineare Stellung darstellen.

Diese Signale SA, SR und DR werden beispielsweise von der Zustandserfassungsstufe 54 erfasst, in Daten umgewandelt und gegebenenfalls abgespeichert, so dass stets die aktuellen Informationen über die Positionen des Kugelhalses 18 mit der Kupplungskugel 20 und über die einzelnen Stellungen des Antriebs 30 der zentralen Prozessoreinheit 50 zur Verfügung stehen.

Über die Zustandserfassungsstufe 54 ist die zentrale Prozessoreinheit 50 der Überwachungseinheit 42 beispielsweise bei der Startzustandsprüfung in der Lage, den Zustand des Zusatzsystems 16, das heißt in diesem Fall der Anhängekupplung 16, zu erfassen und für die Frage, ob ein Ansteuern des Antriebs 30 erfolgen soll oder nicht, der zentralen Prozessoreinheit 50 zur Verfügung zu stellen.

Beispielsweise kann als eine der Voraussetzungen für einen sicheren Betrieb vorgegeben sein, dass vor einer Aktion des Antriebs 30 der Kugelhals 18 in einer der durch die Signale SR und SA anzeigbaren Endstellungen stehen muss und der Antrieb 30 ebenfalls in einer entsprechenden Stellung stehen muss.

Ferner ist die zentrale Prozessoreinheit 50 noch mit einer Auslöseeinheit 62 verbunden, welche zum Bewegen des Kugelhalses 18 zwischen der Ruhestellung und der Arbeitsstellung von einer Bedienungsperson betätigbar ist und bei Betätigung ein erstes Anforderungssignal A1 abgibt, welches beispielsweise direkt der zentralen Prozessoreinheit 50 zur Verfügung gestellt wird.

Darüberhinaus umfasst die Überwachungseinheit 42 noch eine Funktionsblockiereinheit 64 für die Antriebssteuerung 44, welche im einfachsten Fall eine Spannungsversorgung 66 für die Antriebssteuerung 44 mittels eines Schalters 68 schaltet, wobei die zentrale Prozessoreinheit 50 den Schalter 68 so ansteuert, dass dieser schließt, um die Antriebssteuerung 44 in den funktionsfähigen Zustand zu bringen, und den Schalter 68 öffnet und somit die Spannungsversorgung 66 für die Antriebssteuerung 44 unterbricht, um diese in den funktionsblockierten Zustand zu bringen.

Alternativ oder ergänzend zum Ein- und Ausschalten der Spannungsversorgung 66 der Antriebssteuerung 44 besteht aber auch die Möglichkeit, beispielsweise bei ständiger aktiver Spannungsversorgung 66 die Antriebssteuerung 44 dadurch funktionsunfähig zu machen, dass beispielsweise der Schalter 68 die Verbindung zwischen der Antriebssteuerung 44, und dem Antrieb 30 unterbricht, um den funktionsblockierten Zustand zu erreichen, oder nicht unterbricht, um den funktionsfähigen Zustand zu erreichen.

Alternativ oder ergänzend dazu gibt es aber auch noch die Möglichkeit, bei bestehender aktiver Spannungsversorgung 66 einen zentralen Prozessor 70 der Antriebssteuerung 44 zu blockieren, beispielsweise durch Unterbrechung der Spannungsversorgung oder Unterbrechen eines Zeittaktes des Prozessors 70 oder ähnliche, die Funktion des Prozessors 70 blockierende Maßnahmen.

Die Antriebssteuerung 44 ist ferner dadurch aktivierbar, dass von der Überwachungseinheit 42, insbesondere der zentralen Prozessoreinheit 50 ein Startsignal STS, beispielsweise über den Lin-Bus 46 der Antriebssteuerung 44 und somit deren Prozessor 70 übermittelt wird.

Bei anliegendem Startsignal STS erfasst der zentrale Prozessor 70 beispielsweise über das Vorliegen oder nicht Vorliegen der Signale SA, SR und DR die Position des Kugelhalses 18 mit der Kupplungskugel 20, beispielsweise ob diese in der durch in Fig. 2 durchgezogen gezeichneten Arbeitsstellung oder in der in Fig. 2 gestrichelt gezeichneten Ruhestellung steht, und ferner noch ob der Antrieb 30 in einer der Position des Kugelhalses 18 mit der Kupplungskugel 20 angemessenen Drehstellung steht.

Ist dies der Fall, so wird seitens des Prozessors 70 über Versorgungsleitungen 72 zwischen der Antriebssteuerung 44 und dem Antrieb 30 der Antrieb 30 in Gang gesetzt, so dass dieser beispielsweise die Fixierung des Kugelhalses 18 in der jeweiligen Stellung löst und den Kugelhals 18 mit der Kupplungskugel 20 entweder von der in Fig. 2 durchgezogen gezeichneten Arbeitsstellung in die in Fig. 2 gestrichelt gezeichnete Ruhestellung oder von der in Fig. 2 gestrichelt gezeichnete Ruhestellung in die in Fig. 2 durchgezogen gezeichneten Arbeitsstellung bewegt.

Ist diese Bewegung des Kugelhalses 18 beendet, so erfolgt durch die Lager-/Fixiereinheit 22 eine Fixierung des Kugelhalses 18 mit der Kupplungskugel 20 in der Lager-/Fixiereinheit 22, und dies wird über Vorliegen oder nicht Vorliegen der Signale SA, SR, DR erfasst, die einen Satz von Zustandsgrößen darstellen, welche die Positionen des Kugelhalses 16 und die Stellungen des Antriebs 30 weitgehend definieren.

Wird nun beim Verschwenken des Kugelhalses 18 von der Ruhestellung in die Arbeitsstellung oder umgekehrt jeweils die Endstellung erreicht, so ist dies für den Prozessor 70 der Antriebssteuerung 44 über die Zustandsvariablen SA, SR und DR erkennbar und bei Vorliegen derselben schaltet der Prozessor 70 der Antriebssteuerung 44 die Stromversorgung für den Antrieb 30 wieder ab.

Die Zustandsvariablen SA, SR und DR werden jedoch aber auch von der Antriebssteuerung 44 unmittelbar und unverändert über den Lin-Bus 46 an die Zustandserfassungseinheit 54 weitergegeben und von dieser gespeichert, so dass auch die zentrale Prozessoreinheit 50 der Überwachungseinheit 42 in gleicher Weise wie der zentrale Prozessor 70 der Antriebssteuerung 44, beispielsweise im Zuge einer Endzustandsprüfung erkennt, dass nunmehr die jeweilige Endstellung und somit ein sicherer Zustand der Anhängekupplung erreicht ist.

Ist dies der Fall, so schaltet die zentrale Prozessoreinheit 50 über die Funktionsblockiereinheit 64 die Antriebssteuerung 44 in den funktionsblockierten Zustand, so dass die Antriebssteuerung 44 nicht mehr in der Lage ist, irgendwelche Aktionen des Antriebs 30 herbeizuführen und somit auch nicht mehr in der Lage ist, selbst bei irgendwelchen Hard- oder Softwarefehlern, Fehlfunktionen des Antriebs 30 durch Fehlansteuerungen herbeizuführen.

Durch die Tatsache, dass die Antriebssteuerung 44 lediglich kurz vor einer Aktion des Antriebs 30 in einen funktionsfähigen Zustand überführt wird und kurz nach Abschalten des Antriebs 30 oder mit dem Abschalten des Antriebs 30 wieder in den funktionsblockierten Zustand überführt wird und dies außerdem nur in spezifischen Fahrzuständen und/oder Fahrzeugzuständen möglich ist, muss die Antriebssteuerung 44 aufgrund der sehr kurzen Betriebsdauer nicht dem Sicherheitsniveau ASIL B oder ASIL C entsprechen, sondern kann bei einfacher konfiguriert und hergestellt werden, beispielsweise gemäß Sicherheitsniveau QM gemäß ISO 26262, so dass dadurch ein vereinfachter Aufbau der Antriebssteuerung 44 und ein Betrieb der Antriebssteuerung 44 mit vereinfachten Funktionalitäten möglich ist.

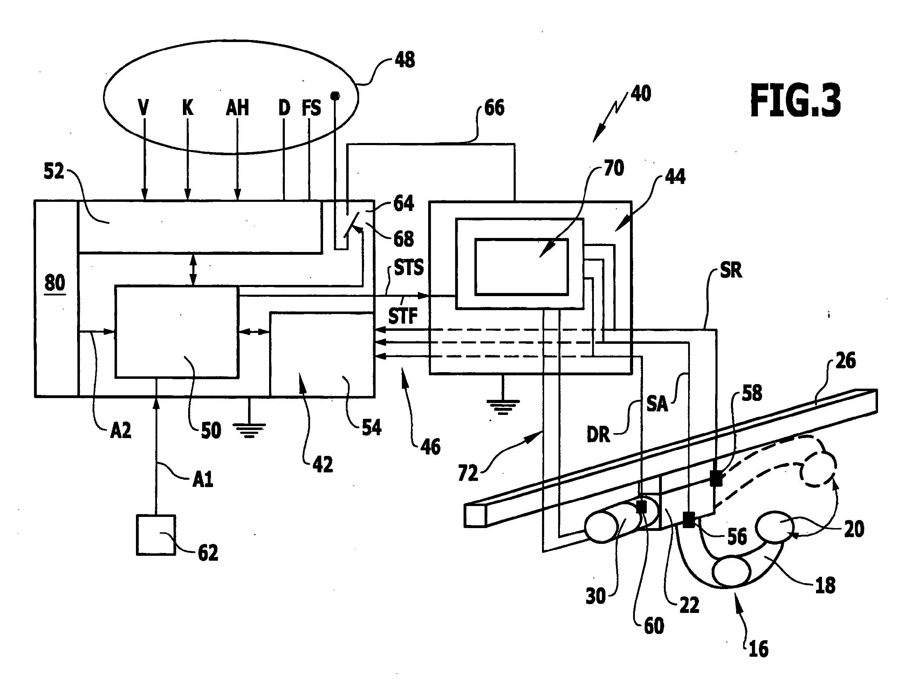

Bei einem zweiten Ausführungsbeispiel eines erfindungsgemäßen Steuerungssystems, dargestellt in Fig. 3, sind alle diejenigen Elemente, die mit denen des ersten Ausführungsbeispiels identisch sind mit denselben Bezugszeichen versehen, so dass auf die Beschreibung derselben vollinhaltlich Bezug genommen werden kann.

In Abwandlung der ersten Ausführungsform ist bei der zweiten Ausführungsform noch eine Verspannsteuerung 80 vorgesehen, welche mit der Eingangsstufe 52 zusammenwirkt und aus der Eingangsstufe 52 Informationen über den Fahrzustand, beispielsweise die Geschwindigkeit V und Informationen über die Fahrdynamik D extrahiert, um daraus abzuleiten, inwieweit auch beim Fahren des Fahrzeugs ein Verspannen der Fixierung, das heißt einfach ein erneutes aktivieren der Fixierung des Kugelhalses 18 in der jeweiligen Stellung in der Lager/Fixiereinheit 22, erforderlich ist.

Eine derartige Verspannsteuerung 80 ist beispielsweise in der deutschen Patentanmeldung 10 2009 015 916.9-21 offenbart.

Hierzu erzeugt die Verspannsteuerung 80 ein Anforderungssignal A2, das die zentrale Prozessoreinheit 50 der Überwachungssteuerung 42 dazu veranlasst, beispielsweise im Zuge einer Startzustandsprüfung die Fahrzustände und/oder Fahrzeugzustände und/oder funktionelle Zustände des Zusatzsystems 16 zu prüfen und danach ein Startsignal STF zu erzeugen, das die Antriebssteuerung 44 dann, wenn sie im funktionsfähigen Zustand ist, veranlasst den Antrieb 30 zu einer Aktion, bei welcher die Fixierung des Kugelhalses 18 erneut im Sinne eines Fixiervorgangs aktiviert wird, nicht jedoch dazu, wie beim Startsignal SFS, die Fixierung zu lösen und den Kugelhals 18 zu verschwenken.

Nach Beendigung der Aktivierung der Fixierung erfolgt dann ein Überprüfen der funktionellen Zustände, beispielsweise im Zuge einer Endzustandsprüfung und schließlich ein Überführen der Antriebssteuerung 44 in den funktionsblockierten Zustand wie bei den vorstehend beschriebenen Aktionen.

Im Übrigen sind mit dem zweiten Ausführungsbeispiel dieselben Funktionen und Aktionen realisierbar wie beim ersten Ausführungsbeispiel.

## Patentansprüche

1. Steuerungssystem für Zusatzsysteme (16) von Kraftfahrzeugen (10), welche ein durch einen Antrieb (30) beeinflussbares bewegbares Element (18) aufweisen, insbesondere für Anhängekupplungen (16) mit einem relativ zu einer fahrzeugfesten Lagereinheit (22) bewegbaren Kugelhals (18), dessen Bewegung durch den Antrieb (30) beeinflussbar ist, wobei das Steuerungssystem (40) eine mindestens mit dem Kraftfahrzeug (10) kommunizierende Überwachungseinheit (42) aufweist, welche nach einer Zustandsprüfung eine Aktion des Antriebs (30) zulässt oder verhindert, und eine Antriebssteuerung (44) zum Betreiben des Antriebs (30), wobei die Antriebssteuerung (44) mit der Überwachungseinheit (42) über eine Schnittstelle (46) kommuniziert und durch die Überwachungseinheit (42) zwischen einem funktionsblockierten Zustand, in welchem ein Ansteuern des Antriebs (30) durch die Antriebssteuerung (44) nicht möglich ist, und einem funktionsfähigem Zustand, in welchem der Antrieb (30) durch die Antriebssteuerung (44) ansteuerbar ist, umschaltbar ist,
**dadurch gekennzeichnet, dass** die Überwachungseinheit (42) mit einer Auslöseeinheit (62) gekoppelt ist und dass mit der Auslöseeinheit (62) ein Anforderungssignal (A) erzeugbar ist, welches die Antriebssteuerung (44) zum Starten einer Aktion des Antriebs (30) veranlasst und dabei die Antriebssteuerung (44) in den funktionsfähigen Zustand schaltet und dass die Überwachungseinheit (42) die Antriebssteuerung (44) vor Weitergabe des Anforderungssignals (A) an diese in den funktionsfähigen Zustand schaltet.

2. Steuerungssystem nach Anspruch 1, **dadurch gekennzeichnet, dass** der funktionsblockierte Zustand der Antriebssteuerung (44) ein funktionsunfähiger Zustand ist, in welchem die Antriebssteuerung (44) nicht arbeiten kann.

3. Steuerungssystem nach Anspruch 1 oder 2, **dadurch gekennzeichnet, dass** der funktionsblockierte Zustand der Antriebssteuerung (44) ein vollständig abgeschalteter Zustand der Antriebssteuerung (44) ist.

4. Steuerungssystem nach einem der voranstehenden Ansprüche, **dadurch gekennzeichnet, dass** im funktionsblockierten Zustand eine Stromversorgung (66) der Antriebssteuerung (44) unterbrochen ist.

5. Steuerungssystem nach einem der voranstehenden Ansprüche, **dadurch gekennzeichnet, dass** die Überwachungseinheit (42) die Antriebssteuerung (44) vor oder zum Durchführen einer Aktion des Antriebs (30) in den funktionsfähigen Zustand schaltet.

6. Steuerungssystem nach einem der voranstehenden Ansprüche, **dadurch gekennzeichnet, dass** die Überwachungseinheit (42) nach Beendigung einer Aktion des Antriebs (30) die Antriebssteuerung (44) in den funktionsblockierten Zustand schaltet.

7. Steuerungssystem nach einem der voranstehenden Ansprüche, **dadurch gekennzeichnet, dass** die Überwachungseinheit (42) die Antriebssteuerung (44) lediglich während der Ausführung einer Aktion des Antriebs (30) in den funktionsfähigen Zustand schaltet.

8. Steuerungssystem nach einem der voranstehenden Ansprüche, **dadurch gekennzeichnet, dass** die Überwachungseinheit (42) entsprechend dem notwendigen Sicherheitsstandard ausgelegt ist und dass insbesondere die Antriebssteuerung (44) entsprechend einem niedrigeren Sicherheitsstandard ausgelegt ist als die Überwachungseinheit (42).

9. Steuerungssystem nach einem der voranstehenden Ansprüche, **dadurch gekennzeichnet, dass** die Überwachungseinheit (42) für die Zustandsprüfung mindestens einem Fahrzeugzustandsparameter (K) und/oder mindestens einem Fahrzustandsparameter (V, D) des Kraftfahrzeugs (10) erfasst.

10. Steuerungssystem nach einem der voranstehenden Ansprüche, **dadurch gekennzeichnet, dass** die Überwachungseinheit (42) und/oder die Antriebssteuerung (44) Antriebsstellungen des Antriebs (30) anzeigende Stellungssignale (DR) erfassen.

11. Steuerungssystem nach einem der voranstehenden Ansprüche, **dadurch gekennzeichnet, dass** die Überwachungseinheit (42) und/oder die Antriebssteuerung (44) Positionen des bewegbaren Elements (18) anzeigende Positionssignale (SA, SR) erfassen.

12. Steuerungssystem nach einem der voranstehenden Ansprüche, **dadurch gekennzeichnet, dass** die Überwachungseinheit (42) die Antriebssteuerung (44) erst nach Vorliegen eines Anforderungssignals für eine Aktion des Antriebs (30) die Antriebssteuerung (44) in den funktionsfähigen Zustand schaltet.

13. Steuerungssystem nach einem der voranstehenden Ansprüche, **dadurch gekennzeichnet, dass** die Überwachungseinheit (42) vor Weitergabe des Anforderungssignals (A) eine Startzustandsprüfung ausführt und dazu mindestens ein Fährzustandssignal (V, D) des Kraftfahrzeugs (10) und/oder mindestens ein Fahrzeugzustandssignal (K, AH) des Kraftfahrzeugs und/oder mindestens ein Positionssignal (SA, SR) des Zusatzsystems (16) und/oder mindestens ein Stellungssignal (DR) des Antriebs (30) erfasst und berücksichtigt.

14. Steuerungssystem nach einem der voranstehenden Ansprüche, **dadurch gekennzeichnet, dass** die Überwachungseinheit (42) vor einem Umschalten der Antriebssteuerung (44) in den funktionsblockierten Zustand eine Endzustandsprüfung durchführt und dazu mindestens eine Fahrzustandssignal (V, D) und/oder mindestens ein Fahrzeugzustandssignal (K, AH) und/oder mindestens ein Positionssignal (SA, SR) des Zusatzsystems (16) und/oder mindestens ein Stellungssignal (DR) des Antriebs (30) berücksichtigt.

## Claims

1. Control system for auxiliary systems (16) of motor vehicles (10) having a movable element (18) influenceable by a drive (30), in particular for trailer couplings (16) with a ball neck (18) movable relative to a bearing unit (22) stationary on the vehicle, the movement of said ball neck being influenceable by the drive (30), wherein the control system (40) has a monitoring unit (42) communicating at least with the motor vehicle (10) and permitting or preventing an action of the drive (30) following a status check, and a drive control (44) for operating the drive (30), wherein the drive control (44) communicates with the monitoring unit (42) via an interface (46) and is switchable by the monitoring unit (42) between an operatively blocked state, an activation of the drive (30) by the drive control (44) not being possible in said state, and an operative state, the drive (30) being activatable by the drive control (44) in said state,
**characterized in that** the monitoring unit (42) is coupled to an actuation unit (62) and that a request signal (A) is generatable with the actuation unit (62), said signal causing the drive control (44) to start an action of the drive (30) and thereby switching the drive control (44) into the operative state, and that the monitoring unit (42) switches the drive control (44) into the operative state prior to the request signal (A) being passed to it.

2. Control system as defined in claim 1, **characterized in that** the operatively blocked state of the drive control (44) is an inoperative state, the drive control (44) being unable to function in said state.

3. Control system as defined in claim 1 or 2, **characterized in that** the operatively blocked state of the drive control (44) is a completely switched off state of the drive control (44).

4. Control system as defined in any one of the preceding claims, **characterized in that** in the operatively blocked state a supply of current (66) to the drive control (44) is interrupted.

5. Control system as defined in any one of the preceding claims, **characterized in that** the monitoring unit (42) switches the drive control (44) into the operative state prior to or for the purpose of performing an action of the drive (30).

6. Control system as defined in any one of the preceding claims, **characterized in that** the monitoring unit (42) switches the drive control (44) into the operatively blocked state following termination of an action of the drive (30).

7. Control system as defined in any one of the preceding claims, **characterized in that** the monitoring unit (42) switches the drive control (44) into the operative state solely during the implementation of an action of the drive (30).

8. Control system as defined in any one of the preceding claims, **characterized in that** the monitoring unit (42) is designed in accordance with the necessary safety standard and that the drive control (44), in particular, is designed in accordance with a lower safety standard than the monitoring unit (42).

9. Control system as defined in any one of the preceding claims, **characterized in that** for the status check the monitoring unit (42) detects at least one vehicle status parameter (K) and/or at least one driving status parameter (V, D) of the motor vehicle.

10. Control system as defined in any one of the preceding claims, **characterized in that** the monitoring unit (42) and/or the drive control (44) detect positional signals (DR) indicating drive positions of the drive (30).

11. Control system as defined in any one of the preceding claims, **characterized in that** the monitoring unit (42) and/or the drive control (44) detect position signals (SA, SR) indicating positions of the movable element (18).

12. Control system as defined in any one of the preceding claims, **characterized in that** the monitoring unit (42) switches the drive control (44) into the operative state only after a request signal for an action of the drive (30) is present.

13. Control system as defined in any one of the preceding claims, **characterized in that** the monitoring unit (42) performs a starting status check prior to passing on the request signal (A) and for this purpose detects and factors in at least one driving status signal (V, D) of the motor vehicle (10) and/or at least one vehicle status signal (K, AH) of the motor vehicle and/or at least one position signal (SA, SR) of the auxiliary system (16) and/or at least one positional signal (DR) of the drive (30).

14. Control system as defined in any one of the preceding claims, **characterized in that** the monitoring unit (42) carries out an end status check prior to any switching of the drive control (44) into the operatively blocked state and for this purpose factors in at least one driving status signal (V, D) and/or at least one vehicle status signal (K, AH) and/or at least one position signal (SA, SR) of the auxiliary system (16) and/or at least one positional signal (DR) of the drive (30).

## Revendications

1. Système de commande pour des systèmes additionnels (16) de véhicules automobiles (10), qui présentent un élément mobile (18) influençable par un entraînement (30), en particulier pour des attelages de remorques (16) avec un col à boule (18) mobile par rapport à une unité de palier (22) solidaire du véhicule, dont le mouvement peut être influencé par l'entraînement (30), dans lequel le système de commande (40) comporte au moins une unité de surveillance (42) communicant avec le véhicule automobile (10), qui permet ou empêche une action de l'entraînement (30) après un contrôle d'état, et une commande d'entraînement (44) pour la conduite de l'entraînement (30), dans lequel la commande d'entraînement (44) communique avec l'unité de surveillance (42) par l'intermédiaire d'une interface (46) et peut être commutée par l'unité de surveillance (42) entre un état de blocage de fonctionnement, dans lequel une commande de l'entraînement (30) par la commande d'entraînement (44) n'est pas possible, et un état de possibilité de fonctionnement, dans lequel l'entraînement (30) peut être commandé par la commande d'entraînement (44), **caractérisé en ce que** l'unité de surveillance (42) est couplée à une unité de déclenchement (62) et **en ce que** l'on peut, avec l'unité de déclenchement (62) produire un signal de demande (A), qui ordonne à la commande d'entraînement (44) de démarrer une action de l'entraînement (30) et qui en l'occurrence commute la commande d'entraînement (44) dans l'état de possibilité de fonctionnement et **en ce que** l'unité de surveillance (42) commute la commande d'entraînement (44) dans l'état de possibilité de fonctionnement avant la retransmission du signal de demande (A) à celle-ci.

2. Système de commande selon la revendication 1, **caractérisé en ce que** l'état de blocage de fonctionnement de la commande d'entraînement (44) est un état d'impossibilité de fonctionnement, dans lequel la commande d'entraînement (44) ne peut pas travailler.

3. Système de commande selon la revendication 1 ou 2, **caractérisé en ce que** l'état de blocage de fonctionnement de la commande d'entraînement (44) est un état complètement déconnecté de la commande d'entraînement (44).

4. Système de commande selon l'une quelconque des revendications précédentes, **caractérisé en ce que**, dans l'état de blocage de fonctionnement, une alimentation électrique (66) de la commande d'entraînement (44) est interrompue.

5. Système de commande selon l'une quelconque des revendications précédentes, **caractérisé en ce que** l'unité de surveillance (42) commute la commande d'entraînement (44) dans l'état de possibilité de fonctionnement avant ou pour l'exécution d'une action de l'entraînement (30).

6. Système de commande selon l'une quelconque des revendications précédentes, **caractérisé en ce que** l'unité de surveillance (42) commute la commande d'entraînement (44) dans l'état de blocage de fonctionnement après la fin d'une action de l'entraînement (30).

7. Système de commande selon l'une quelconque des revendications précédentes, **caractérisé en ce que** l'unité de surveillance (42) commute la commande d'entraînement (44) dans l'état de possibilité de fonctionnement uniquement pendant l'exécution d'une action de l'entraînement (30).

8. Système de commande selon l'une quelconque des revendications précédentes, **caractérisé en ce que** l'unité de surveillance (42) est conçue conformément à la norme de sécurité nécessaire et **en ce que** la commande d'entraînement (44) en particulier est conçue conformément à une norme de sécurité plus basse que l'unité de surveillance (42).

9. Système de commande selon l'une quelconque des revendications précédentes, **caractérisé en ce que** l'unité de surveillance (42) détecte, pour le contrôle d'état, au moins un paramètre d'état du véhicule (K) et/ou au moins un paramètre d'état de roulage (V, D) du véhicule automobile (10).

10. Système de commande selon l'une quelconque des revendications précédentes, **caractérisé en ce que** l'unité de surveillance (42) et/ou la commande d'entraînement (44) détectent des signaux de position (DR) indiquant des positions d'entraînement de l'entraînement (30).

11. Système de commande selon l'une quelconque des revendications précédentes, **caractérisé en ce que** l'unité de surveillance (42) et/ou la commande d'entraînement (44) détectent des signaux de position (SA, SR) indiquant des positions de l'élément mobile (18).

12. Système de commande selon l'une quelconque des revendications précédentes, **caractérisé en ce que** l'unité de surveillance (42) ne commute la commande d'entraînement (44) dans l'état de possibilité de fonctionnement qu'après la présence d'un signal de demande pour une action de l'entraînement (30).

13. Système de commande selon l'une quelconque des revendications précédentes, **caractérisé en ce que** l'unité de surveillance (42) effectue un contrôle d'état initial avant la retransmission du signal de demande (A) et détecte et tient compte à cet effet d'au moins un signal d'état de roulage (V, D) du véhicule automobile (10) et/ou d'au moins un signal d'état du véhicule (K, AH) du véhicule automobile et/ou d'au moins un signal de position (SA, SR) du système additionnel (16) et/ou d'au moins un signal de position (DR) de l'entraînement (30).

14. Système de commande selon l'une quelconque des revendications précédentes, **caractérisé en ce que** l'unité de surveillance (42) effectue un contrôle d'état final avant une commutation de la commande d'entraînement (44) dans l'état de blocage de fonctionnement et tient compte à cet effet d'au moins un signal d'état de roulage (V, D) et/ou d'au moins un signal d'état du véhicule (K, AH) et/ou d'au moins un signal de position (SA, SR) du système additionnel (16) et/ou d'au moins un signal de position (DR) de l'entraînement (30).
